# EUROPEAN PATENT SPECIFICATION

(11) **EP 2 495 433 B1**
(45) Date of publication and mention of the grant of the patent: **02.03.2016**
(21) Application number: 11382054.2
(22) Date of filing: 02.03.2011
(51) Int. Cl.: F03D 1/00, F03D 80/70, F16H 57/025

(54) **Wind turbine and method for lifting a gearbox torque arm**
Windturbine und Verfahren zum Anheben eines Getriebedrehmomentarms
Éolienne et procédé pour lever un bras de couple de boîte de vitesses

(43) Date of publication of application: 05.09.2012
(73) Proprietor: ALSTOM Renewable Technologies, 38100 Grenoble CEDEX (FR)
(72) Inventor: Colom Quetglas, Miquel Àngel, 08005, Barcelona (ES)
(74) Representative: de Rooij, Mathieu Julien

(56) References cited:
- EP-A1- 1 046 832
- WO-A2-2011/020086
- CN-A- 101 363 419
- CN-U- 201 666 225
- DE-U1-202005 001 519
- GB-A- 2 018 942
- JP-A- 2004 239 113

## Description

The present invention relates to a wind turbine, and more particularly relates to a wind turbine comprising a gearbox having a torque arm. The present invention also relates to a method for lifting a gearbox torque arm. A lifting tool suitable for use in such a method is also disclosed.

### BACKGROUND ART

Modern wind turbines are commonly used to supply electricity into the electrical grid. Wind turbines of this kind generally comprise a rotor with a rotor hub and a plurality of blades. The rotor is set into rotation under the influence of the wind on the blades. The rotation of the rotor shaft either directly drives the generator rotor ("directly driven") or through the use of a gearbox.

There are various known ways to mount a gearbox in the nacelle of the wind turbine. In general, some kind of vibration damping elements is provided to reduce the transmission of vibrations from the gearbox to the nacelle, tower and other wind turbine components.

EP 1 197 677 discloses a wind turbine comprising a gearbox having wedge-shaped flanges. The flanges are supported by damping elements.

EP 1 566 543 discloses adjustable damping elements supporting the torque arms of a wind turbine gearbox.

EP 2 172 647 discloses a wind turbine with a gearbox. In at least one embodiment, the torque arms of the gearbox are supported by flexible supports.

One problem associated with these designs is that repair or replacement of a (damping) element on which the gearbox rests may not be possible unless the whole gearbox is removed. In order to lift the gearbox, a heavy crane may be used. This can be very expensive however. Alternatively, it is known to use hydraulic pistons positioned e.g. underneath the gearbox torque arms to lift the gearbox. This alternative however may not always be reliable and safe. Due to the lack of space around the gearbox torque arms in the nacelle, it may be complicated to install hydraulic pistons underneath the torque arm. Due to the inclination of the surfaces on which the hydraulic pistons need to be installed (due to a tilt angle of the wind turbine rotor) and the inclination of the torque arms, it may be difficult to ensure that a hydraulic piston cannot slip with respect to the gearbox torque arm.

It is an object of the present invention to provide a method for lifting a gearbox that does not suffer from the aforementioned problems. It is thus a further object of the present invention to provide an improved method for replacing or repairing a gearbox support element. It is a further object to provide a wind turbine suitable for such methods.

### SUMMARY OF THE INVENTION

In a first aspect, the invention provides a wind turbine comprising a gearbox having a torque arm, an end portion of the torque arm being held in a support structure and being supported by at least one damping element, wherein the support structure substantially surrounds an end portion of the torque arm and the support structure and the gearbox torque arm comprise substantially vertically aligned through-holes such that a rod of a lifting tool can be fitted through said through-holes.

In this aspect, a wind turbine is provided which comprises a gearbox that is adapted to be lifted using a lifting tool comprising a rod, which generally may be less complicated and less expensive than in prior art systems and methods.

Also disclosed is a lifting tool for lifting a gearbox torque arm in such a wind turbine comprising a longitudinal rod having a first end and a second end, wherein portions of the rod near the first and second ends comprise threads, the lifting tool further comprising a first nut adapted to cooperate with the threads at the first end and a second nut adapted to cooperate with the threads at the second end, the rod adapted to be fitted through the holes provided in the torque arm and the support structure, and having a length such that when fitted through the holes, it extends beyond said holes on both sides.

As such, a lifting tool is disclosed which may be used for lifting a gearbox torque arm sufficiently such that a damping element provided underneath the torque arm may be inspected, repaired and/or replaced. In accordance with this aspect, it is not necessary to lift or remove the complete gearbox. To accomplish this, the support structure already surrounding the torque arm is used. There is thus no need for e.g. an additional crane.

In yet another aspect, the invention provides a method for lifting a gearbox torque arm in a wind turbine comprising a gearbox having a torque arm, an end portion of the torque arm being held in a support structure and being supported by at least one damping element, wherein the support structure and the gearbox torque arm comprise aligned through-holes such that a rod of a lifting tool can be fitted through said through-holes. The method comprises inserting a rod through the through-holes provided in the support structure and gearbox torque arm such that a first end of the rod extends above the support structure and a second end extends underneath the torque arm; mounting first and second nuts at the first and second end of the rod respectively; turning at least one of the nuts such as to reduce the distance between them and thereby raise the gearbox torque arm.

In some embodiments, the end portion of the torque arm is clamped between two damping elements. In these embodiments, the damping element on top of the torque arm may first be removed before lifting the torque arm. To this end, the support structure may need to be at least partially disassembled.

In some embodiments, the rod of the lifting tool comprises threads substantially along its entire length. In alternative embodiments, only portions of the rod are provided with threads.

In some embodiments, the lifting tool comprises at least one washer. Optionally, one or more spherical washers may be used. Spherical washers may be used to compensate for small misalignments between parts.

In some embodiments, a connection between the torque arm and the support structure in a substantially horizontal direction is provided. In these embodiments, it can be assured that no horizontal displacement occurs during lifting of the gearbox even when the rotor shaft has a substantial tilting angle.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figures 1a - 1c illustrate an isometric view and side views of a wind turbine gearbox in accordance with an embodiment of the present invention;
Figure 2 illustrates a lifting tool which may be used in embodiments of the present invention;
Figures 3a - 3e schematically illustrate a method for lifting a gearbox torque arm in accordance with an embodiment of the present invention.

### DETAILED DESCRIPTION OF EMBODIMENTS OF THE INVENTION

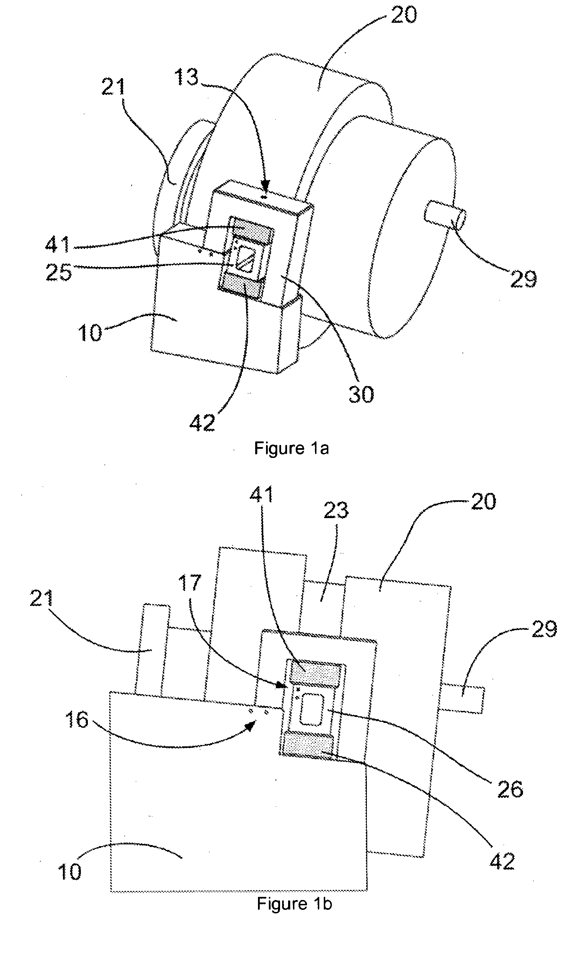

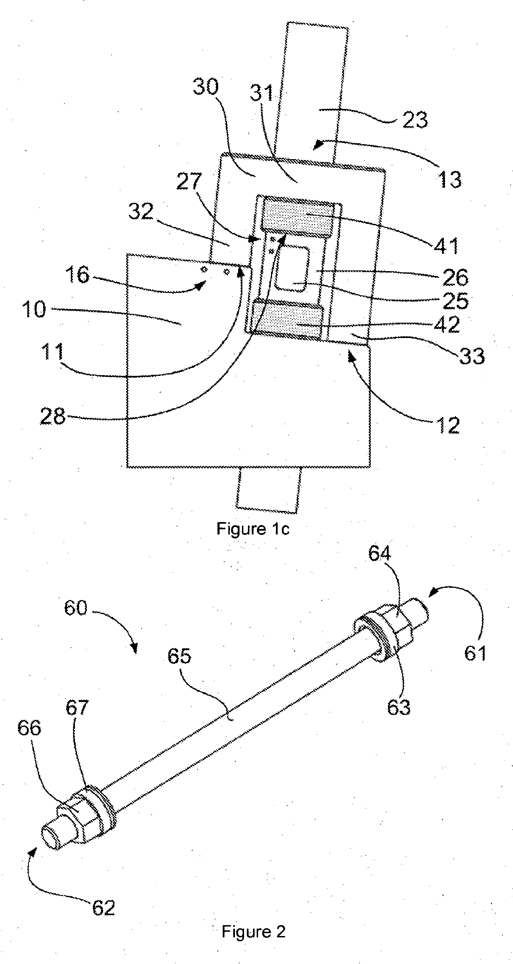

Figure 1 a illustrates a side view of a wind turbine gearbox 20 which is mounted on a frame 10. Frame 10 may form part of a nacelle which may be rotatably mounted on a wind turbine tower. Both gearbox 20 and the top surface of frame 10 may be slightly inclined due to a tilt angle of the rotor shaft.

For the gearbox are indicated a flange 21 for connecting to the low speed shaft (i.e. the rotor shaft) and the high speed shaft 29 which in use drives the generator. The gearbox 20 furthermore comprises a mounting flange 23, from which torque arms 25 extend on either side of the gearbox.

The torque arms in this embodiment each comprise a hollow rectangular bracket 26 at an end portion. Damping elements 41 and 42 are provided respectively on top of and underneath the bracket 26. Around these brackets and damping elements 41, 42, a gearbox support structure is provided, which in this embodiment is formed by fixed frame 10 and removable support structure 30. The gearbox support structure may thus substantially surround an end portion of the torque arms.

Figure 1c illustrates a side view of the same wind turbine comprising a frame 10 upon which a gearbox is mounted. In this figure, the gearbox has been represented merely by the mounting flange for reasons of clarity. Some more details of this embodiment will be explained with reference to this simplified figure.

The removable support structure in this embodiment is substantially U-shaped having a base 31 and two legs 32, 33 extending from its base. The ends of the legs 32, 33 of the removable support structure may be fixed to the frame, as schematically indicated with reference signs 11 and 12. Torque arm 25 and damping elements 41, 42 may thus adequately be clamped in the support structure and the damping elements may at least partially reduce the transmissions of vibrations from the gearbox to the frame 10 and tower.

Both support structure 30 and torque arm 25 comprise aligned holes, such that a rod may be inserted through them. The base 31 of the U-shaped removable support structure 30 and bracket 26 may have aligned holes suitable for fitting a rod. This has been schematically indicated in figures 1 a and 1 c with reference signs 13 and 28 respectively.

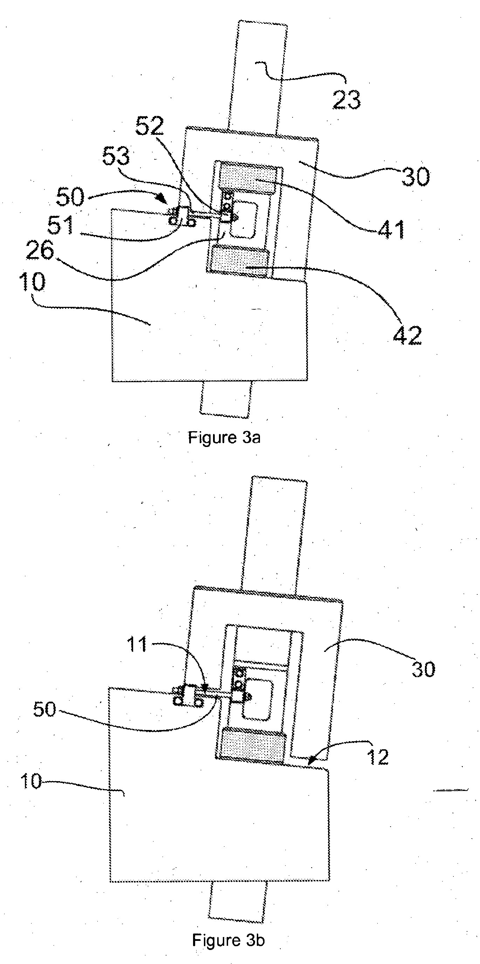

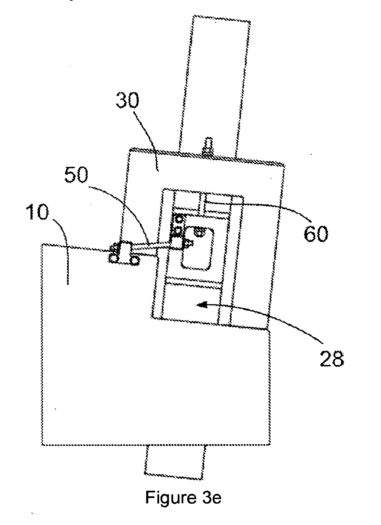

In embodiments of the invention, a stabilizing tool that avoids tumbling or horizontal shifting of the gearbox when it is being lifted may be provided. Such a tool may be fastened using suitable holes 16 provided in frame 10 and holes 27 provided in torque arm 25. This will be further explained with reference to figures 3a - 3e.

Figure 2 illustrates a lifting tool which may be used in embodiments of the present invention.

The lifting tool 60 comprises a rod 65 having a first end 61 and a second end 62. Threaded portions are provided at or near either end of the rod, such that a first nut 64 with mating threads may be mounted at the first end 61 of the rod and such that a second nut 66 with mating threads may be mounted at the second end 62 of the rod.

In this example, a first spherical washer 63 is provided to cooperate with first nut 64 and a second spherical washer 67 is provided to cooperate with second nut 66. Spherical washers are especially suited for applications in wind turbines in which the rotor shaft has a certain inclination (tilt angle). In alternative embodiments (with no or a small tilt angle), no washers, or plane washers may be used. Examples of the lifting tool 60 which may be used in embodiments of the present invention are especially suited for lifting a gearbox torque arm of a wind turbine, e.g. a wind turbine such as shown in figure 1.

Figures 3a - 3e schematically illustrate a method for lifting a gearbox torque arm in accordance with an embodiment of the present invention.

In figure 3a, a first step is illustrated in which a stabilizing tool 50 that aids to avoid tumbling or horizontal shifting of the gearbox when it is being lifted is mounted. To this end, stabilizing tool 50 comprises a rod 53 with a first mounting bracket 51 at a first end to fix it to frame 10 and a second mounting bracket 52 to fix it to torque arm 25. Mounting brackets 51 and 52 are connected to the rod 53 through hinges, such that a relative movement between mounting brackets and rod is possible.

In figure 3b, a further step in the method of lifting the gearbox torque arm is illustrated. Removable support structure 30 may be disconnected from frame 10. The removable support structure may be lifted using e.g. a service crane having a chain hoist, or other hoisting means typically provided in a wind turbine nacelle. The hoisting means typically be provided in a nacelle would be capable of lifting a weight of several hundreds of kilograms, and would therefore generally be suitable to lift the removable support structure. It should furthermore be noted that the same hoisting means would typically not be able to lift a gearbox (with a weight of several tons).

Once the removable support structure has been sufficiently lifted, damping element 41 may be removed from between the gearbox torque arm and said structure. In a next step, the removable support structure may once again be fixed to frame 10.

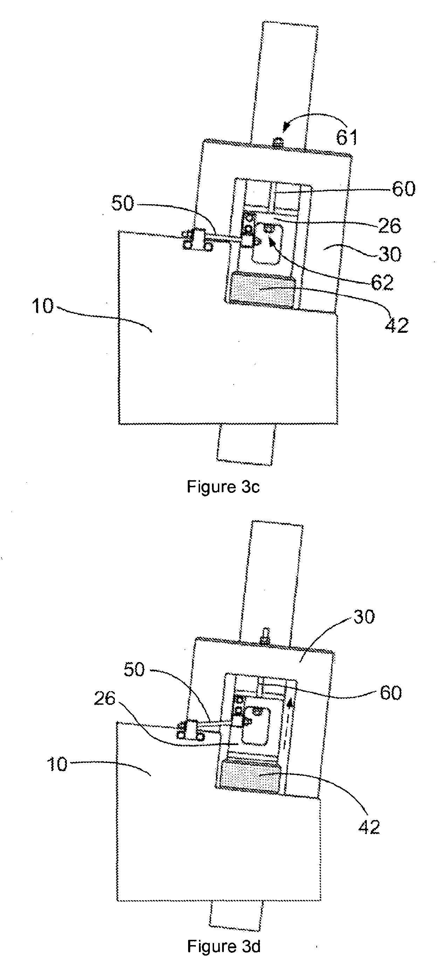

In figure 3c, the step of installing lifting tool 60 with respect to removable support structure 30 and bracket 26 of torque arm 25 is illustrated. When installed, the rod at a first end 61 extends above the support structure and at its second end 62 extends through bracket 26. Nuts and washers (see figure 2) are provided at either end. Spherical washers may be used in this case to adjust for the tilt angle.

Figure 3d illustrates the actual lifting of the gearbox torque arm using lifting tool 60. By appropriately turning either the nut at the first end and/or the nut at the second end to decrease the distance between the nuts, a lifting of the torque arm of the gearbox may be established. In a subsequent step, figure 2e, damping element 42 may be removed, inspected and possibly be substituted.

It should be noted that it is not necessary to lift the whole gearbox. When one gearbox torque arm is lifted, the gearbox as a whole may be inclined in a transverse direction.

The turning of the nut(s) of the lifting tool may be carried out using e.g. suitable electric or hydraulic equipment.

Once the damping element 42 has been inspected, repaired and/or substituted, using the same lifting tool, the gearbox torque arm may be lowered in a controlled manner. After that, the lifting tool 60 may be removed, and the removable support structure may be lifted for the placement of damping element 41. Then the removable support structure may be attached to the frame again and lifting tool and stabilizing tool may be removed and the maintenance of the damping element that normally is difficult to access will have been completed in relatively cheap and reliable manner.

If deemed necessary, a damping element supporting the torque arm on the other side of the gearbox may subsequently be inspected or substituted following the same procedure.

In many implementations, the stabilizing tool may not be necessary. Since the gearbox is generally connected to the rotor hub through the rotor shaft, the gearbox will generally not shift or tumble, even if the stabilizing tool is not used. Additionally, with smaller tilt angles, there will be no tendency for the gearbox to either move or tumble. Also in these cases, the stabilizing tool may not be necessary.

It will be clear that within the scope of the present invention, any kind of gearbox damping element (or other suitable gearbox support element) may be used. By implementing the tools and methods taught by the present disclosure, an efficient and reliable way of repairing and substituting these damping elements / supports may be obtained. It will furthermore be clear that the design of the torque arms of the gearbox and the support structure are not limited to the particular examples illustrated in the figures, but instead may vary widely within the scope of the present invention. In particular, in other embodiments, the torque arms may not comprise hollow brackets at their ends.

Although only a number of particular embodiments and examples of the invention have been disclosed herein, it will be understood by those skilled in the art that other alternative embodiments and/or uses of the invention and obvious modifications and equivalents thereof are possible. Thus, the scope of the present invention should not be limited by particular embodiments, but should be determined only by a fair reading of the claims that follow.

## Claims

1. Wind turbine comprising a gearbox (20) having a torque arm (25), an end portion of the torque arm being held in a support structure (30) and being supported by at least one damping element (41, 42), wherein
the support structure (30) substantially surrounds an end portion of the torque arm (25) and **characterised in that**
the support structure and the gearbox torque arm comprise substantially vertically aligned through-holes (13, 28) such that a rod (65) of a lifting tool (60) can be fitted through said through-holes.

2. Wind turbine according to claim 1, wherein the end portion of the torque arm is clamped between two damping elements (41, 42).

3. Wind turbine according to claim 1 or 2, wherein the support structure is at least partially formed by a frame (10) upon which the gearbox (20) is mounted.

4. Wind turbine according to any of claims 1 - 3, wherein the support structure is at least partially removable.

5. Wind turbine according to any of claims 1 - 4, wherein the end portion of the gearbox torque arm comprises a substantially hollow bracket (26), the through-holes of the gearbox torque arm being provided in said hollow bracket.

6. Method for lifting a gearbox torque arm in a wind turbine comprising a gearbox (20) having a torque arm (25), an end portion of the torque arm (25) being held in a support structure (30) and being supported by at least one damping element (41, 42), wherein the support structure and the gearbox torque arm comprise aligned through-holes (13, 28) such that a rod (65) of a lifting tool (60) can be fitted through said through-holes, the method being **characterised by**
inserting a rod (60) through the through-holes provided in the support structure (30) and gearbox torque arm (25) such that a first end (61) of the rod extends above the support structure (30) and a second end extends underneath the torque arm (25);
mounting first (64) and second nuts (66) at the first and second end of the rod respectively;
turning at least one of the nuts (64, 66) such as to reduce the distance between them and thereby raise the gearbox torque arm.

7. Method according to claim 6, wherein the first nut (64) is turned to raise the gearbox torque arm.

8. Method according to claim 6 or 7, wherein at least one of the nuts is turned using a hydraulic tool.

9. Method according to any of claims 6 - 8, further comprising removing a damping element (42) provided underneath an end portion of the gearbox torque arm.

10. Method according to any of claims 6 - 9, further comprising removing a damping element (41) provided on top of the gearbox torque arm before inserting a rod through the through-holes.

11. Method according to claim 10, wherein removing a damping element (41) provided on top of the gearbox torque arm comprises at least partially disassembling the support structure (30) surrounding the torque arm
removing a damping element (41) provided on top of the gearbox torque arm, and
reassembling the support structure (30) surrounding the torque arm without the damping element.

12. Method according to any of claims 6 - 11, further comprising establishing a connection between the torque arm (25) and the support structure (30) in a substantially horizontal direction, before turning at least one of the nuts (64, 66) such as to reduce the distance between them.

## Patentansprüche

1. Windturbine umfassend ein Getriebe (20), das eine Drehmomentstütze (25) hat, wobei ein Endteil der Drehmomentstütze in einer Tragstruktur (30) gehalten wird und durch mindestens ein Dämpfungselement (41, 42) gestützt wird, wobei
die Tragstruktur (30) im Wesentlichen einen Endteil der Drehmomentstütze (25) umgibt und **dadurch gekennzeichnet ist, dass**
die Tragstruktur und die Getriebedrehmomentstütze im Wesentlichen vertikal ausgerichtete Durchgangsbohrungen (13, 28) umfassen, so dass eine Stange (65) eines Hebewerkzeuges (60) durch die Durchgangsbohrungen eingefügt werden kann.

2. Windturbine nach Anspruch 1, wobei der Endteil der Drehmomentstütze zwischen zwei Dämpfungselementen (41, 42) eingeklemmt ist.

3. Windturbine nach Anspruch 1 oder 2, wobei die Tragstruktur mindestens teilweise durch einen Tragkörper (10) gebildet ist, auf dem das Getriebe (20) angeordnet ist.

4. Windturbine nach einem der Ansprüche 1 - 3, wobei die Tragstruktur mindestens teilweise demontierbar ist.

5. Windturbine nach einem der Ansprüche 1 - 4, wobei der Endteil der Getriebedrehmomentstütze einen im Wesentlichen hohlen Träger (26) umfasst, wobei die Durchgangsbohrungen der Getriebedrehmomentstützung in dem hohlen Träger bereitgestellt sind.

6. Verfahren zum Heben einer Getriebedrehmomentstützung in einer Windturbine umfassend ein Getriebe (20), das eine Drehmomentstützung (25) hat, wobei ein Endteil der Drehmomentstützung (25) in einer Tragstruktur (30) gehalten wird und durch mindestens ein Dämpfungselement (41, 42) gestützt wird, wobei die Tragstruktur und die Getriebedrehmomentstützung fluchtende Durchgangsbohrungen (13, 28) umfassen, so dass eine Stange (65) eines Hebewerkzeuges (60) durch die Durchgangsbohrungen eingefügt werden kann, wobei das Verfahren **dadurch gekennzeichnet ist, dass**
eine Stange (60) durch die in der Tragstruktur (30) und in der Getriebedrehmomentstützung (25) bereitgestellten Durchgangsbohrungen eingeführt wird, so dass sich ein erstes Ende (61) der Stange oberhalb der Tragstruktur (30) erstreckt und sich ein zweites Ende unterhalb der Drehmomentstütze (25) erstreckt;
erste (64) und zweite Muttern (66) jeweils auf dem ersten und zweiten Ende der Stange montiert werden;
mindestens eine der Muttern (64, 66) gedreht wird, so dass der dazwischen liegende Abstand verringert wird und dadurch die Getriebedrehmomentstütze gehoben wird.

7. Verfahren nach Anspruch 6, wobei die erste Mutter (64) gedreht wird, um die Getriebedrehmomentstütze zu heben.

8. Verfahren nach Anspruch 6 oder 7, wobei mindestens eine der Muttern mittels eines hydraulischen Werkzeuges gedreht wird.

9. Verfahren nach einem der Ansprüche 6 - 8, weiterhin umfassend das Demontieren eines unter einem Endteil der Getriebedrehmomentstützung angeordneten Dämpfungselements (42).

10. Verfahren nach einem der Ansprüche 6 - 9, weiterhin umfassend das Demontieren eines über der Getriebedrehmomentstützung angeordneten Dämpfungselements (41), bevor eine Stange durch die Durchgangsbohrungen eingeführt wird.

11. Verfahren nach Anspruch 10, wobei das Demontieren eines über der Getriebedrehmomentstützung angeordneten Dämpfungselements (41) folgendes umfasst: den mindestens teilweisen Ausbau der die Drehmomentstützung umgebende Tragstruktur (30),
das Demontieren eines über der Getriebedrehmomentstützung angeordnetes Dämpfungselements (41), und das
erneute Zusammenbauen der die Drehmomentstützung umgebende Tragstruktur (30) ohne das Dämpfungselement.

12. Verfahren nach einem der Ansprüche 6 - 11, weiterhin umfassend das Erzeugen einer Verbindung zwischen der Drehmomentstützung (25) und der Tragstruktur (30) in einer im Wesentlichen horizontalen Richtung, bevor mindestens eine der Muttern (64, 66) gedreht wird, um den dazwischen liegenden Abstand zu verringern.

## Revendications

1. Éolienne comprenant une boîte de vitesses (20) ayant un bras de réaction (25), étant une partie d'extrémité du bras de réaction soutenue dans une structure de soutien (30) et supportée par au moins un élément amortisseur (41, 42), dans laquelle
la structure de soutien (30) entoure essentiellement une partie d'extrémité du bras de réaction (25) et **caractérisée en ce que**
la structure de soutien et le bras de réaction de la boîte de vitesses comprennent des trous (13, 28) verticalement alignés tels qu'une barre (65) d'un outil de levage (60) peut être insérée au travers desdits trous.

2. Éolienne selon la revendication 1, dans laquelle la partie d'extrémité du bras de réaction est serrée entre deux éléments amortisseurs (41, 42).

3. Éolienne selon la revendication 1 ou 2, dans laquelle la structure de soutien est au moins partiellement formée par un cadre (10) sur lequel la boîte de vitesses (20) est montée.

4. Éolienne selon l'une quelconque des revendications 1 - 3, dans laquelle la structure de soutien est au moins partiellement amovible.

5. Éolienne selon l'une quelconque des revendications 1 - 4, dans laquelle la partie d'extrémité du bras de réaction de la boîte de vitesses comprend un support essentiellement creux (26), étant les trous du bras de réaction de la boîte de vitesses fournis dans ledit support creux.

6. Procédé de levage d'un bras de réaction d'une boîte de vitesses dans une éolienne comprenant une boîte de vitesses (20) ayant un bras de réaction (25), étant une partie d'extrémité du bras de réaction (25) soutenue dans une structure de soutien (30) et étant supportée par au moins un élément amortisseur (41, 42), dans lequel la structure de soutien et le bras de réaction de la boîte de vitesses comprennent des trous alignés (13, 28) de façon qu'une barre (65) d'un outil de levage (60) peut être insérée au travers desdits trous, étant le procédé **caractérisé en ce que**
une barre (60) est insérée au travers des trous fournis dans la structure de soutien (30) et dans le bras de réaction de la boîte de vitesses (25) de façon qu'une première extrémité (61) de la barre s'étend au-dessus de la structure de soutien (30) et une deuxième extrémité s'étend au-dessous du bras de réaction (25) ;
des premiers (64) et deuxièmes écrous (66) sont montés respectivement sur la première et la deuxième extrémité de la barre ;
au moins un des écrous (64, 66) est tourné afin de réduire la séparation entre eux et de lever ainsi le bras de réaction de la boîte de vitesses.

7. Procédé selon la revendication 6, dans lequel le premier écrou (64) est tourné afin de lever le bras de réaction de la boîte de vitesses.

8. Procédé selon l'une quelconque des revendications 6 ou 7, dans lequel au moins un des écrous est tourné en utilisant un outil hydraulique.

9. Procédé selon l'une quelconque des revendications 6 - 8, comprenant en outre enlever un élément amortisseur (42) disposé au-dessous d'une partie d'extrémité du bras de réaction de la boîte de vitesses.

10. Procédé selon l'une quelconque des revendications 6 - 9, comprenant en outre enlever un élément amortisseur (41) disposé au-dessus du bras de réaction de la boîte de vitesses avant d'insérer une barre au travers des trous.

11. Procédé selon la revendication 10, dans lequel l'action d'enlever un élément amortisseur (41) disposé au-dessus du bras de réaction de la boîte de vitesses comprend démonter au moins partiellement la structure de soutien (30) entourant le bras de réaction
enlever un élément amortisseur (41) fourni au-dessus du bras de réaction de la boîte de vitesses, et
assembler de nouveau la structure de soutien (30) entourant le bras de réaction sans l'élément amortisseur.

12. Procédé selon l'une quelconque des revendications 6 - 11, comprenant en outre établir une connexion entre le bras de réaction (25) et la structure de soutien (30) dans une direction essentiellement horizontale, avant de tourner au moins un des écrous (64, 66) de façon à réduire la séparation entre eux.
